# EUROPEAN PATENT SPECIFICATION

(11) **EP 4 020 057 B1**
(45) Date of publication and mention of the grant of the patent: **07.05.2025**
(21) Application number: 21213642.8
(22) Date of filing: 10.12.2021
(51) Int. Cl.: G02B 27/00, G02B 27/01

(54) **HEAD-MOUNTED DISPLAY AND METHOD OF OPTIMISATION**
KOPFMONTIERTE ANZEIGE UND OPTIMIERUNGSVERFAHREN
VISIOCASQUE ET PROCÉDÉ D'OPTIMISATION

(30) Priority: 23.12.2020 SE 2051559
(43) Date of publication of application: 29.06.2022
(73) Proprietor: Tobii AB, 182 17 Danderyd (SE)
(72) Inventor: Johansson Tornéus, Daniel, 182 17 Danderyd (SE)
(74) Representative: Novagraaf Group

(56) References cited:
- US-A1- 2019 302 881
- US-A1- 2020 051 320
- US-A1- 2020 186 787
- US-B2- 9 830 120

## Description

### Technical Field

The present invention relates to a head-mounted display for displaying images to a user, such as a virtual reality, augmented reality, or mixed reality headset. A computer system comprising such a head-mounted display is also disclosed. The invention also relates to a method of improving performance of a head-mounted display. Finally, a computer program and computer-readable medium for executing the method are disclosed.

### Background Art

Head-mounted displays, HMDs, are used in a variety of scenarios for displaying images to a user. These are commonly in extended reality (XR) applications. XR applications include virtual reality (VR) where a person is completely immersed in a virtual environment provided by the HMD, augmented reality (AR) where a person has their real-world environment supplemented with a computer-generated overlay and mixed reality (MR) where the computer-generated overlay of AR is combined in a way that the computer-generated objects interact with the real world as seen by the user.

US 2020/0186787 A1 discloses a parameter calibration method, applicable to a stereoscopic display device including a camera. The parameter calibration method includes the following steps: displaying a virtual object for calibration; obtaining, by using the camera, a two-eye visual angle by which the virtual object for calibration is watched; calibrating a human eye parameter according to the two-eye visual angle, where the human eye parameter includes at least one of an interpupillary distance parameter and an eye relief parameter; and setting the stereoscopic display device according to the calibrated human eye parameter, such that the stereoscopic display device displays according to the calibrated human eye parameter.

US 2020/0051320 A1 discloses a method for viewing a virtual environment through of an optical system. The method includes determining a focus of the optical system configured to view the virtual environment and reconfiguring the optical system for viewing the virtual environment in response to the determining of the focus of the optical system. The method may further include modifying a rendering of the virtual environment in response to the reconfiguring of the optical system.

The standard structure of an HMD includes a frame or strap that enables the HMD to be worn by the user, a housing that incorporates the electronics of the HMD and into which the user looks, and one or more displays that display images to the eyes of the user. As the displays are necessarily displayed very closely to the eye of the user, a lens is interposed between each eye and the display or displays, which allows the eye of the user to focus on a virtual image of the display at a distance that allows the eye to focus.

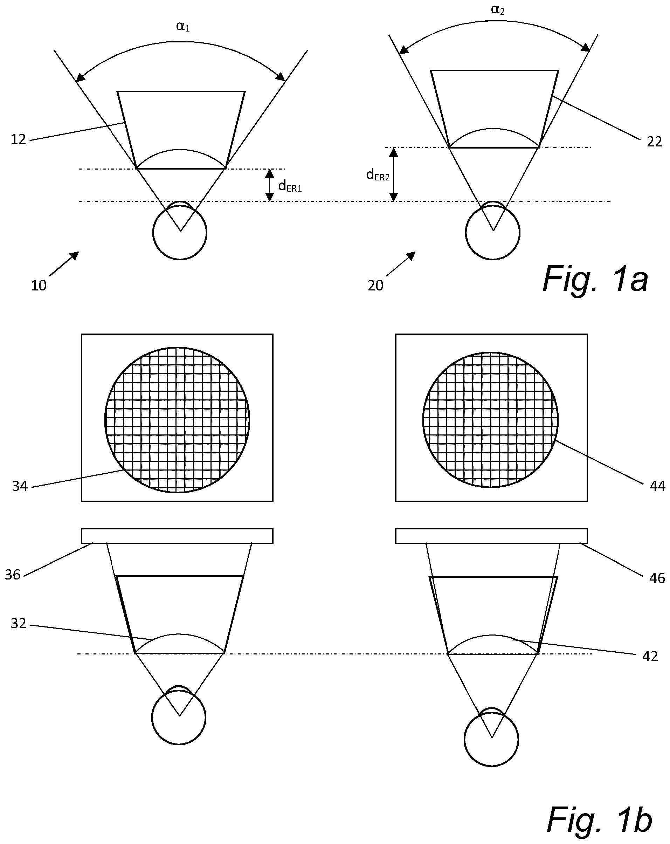

The arrangement of the lens and display means that, depending on the distance between the eye of the user and the lens, the view through the lens, in particular the amount of the display that is visible to the user, may vary. The distance between the eye and the lens is known as the eye relief, and its impact on the field of view of the user is depicted in Figures 1a and 1b. More specifically, for the matters discussed herein, the eye relief is between the entrance pupil of the eye and the lens. However, it may also be considered to be between the lens surface and the cornea surface. For the purposes of discussion, it is necessary to be consistent with the boundaries between which the measurement is taken.

As can be seen from Figure 1a, the angle α₁ from which the eye can receive light through the lens 12, 22 is much greater in the left-hand image 10, with eye relief d_{ER1}, than the angle α₂ in the right-hand image 20, with eye relief d_{ER2}. The difference in field of view through the lens 12, 22 will show itself as a decrease in viewable angle of a display positioned at the other end of the lens from the eye.

An example difference in field of view (FOV) of a display viewed through each lens is shown in Figure 1b. The change in eye relief means that the view of a display 36, 46 through a lens with a fixed power will change. Being closer to the lens 32, as shown in the left-hand image, gives a greater FOV 34 than the FOV 44 shown in relation to an eye further from the lens 42. The area of the display visible at each eye relief is therefore changeable depending on the eye relief. The FOV 34, 44 of each arrangement is shown in Figure 1b, face-on to the viewer, highlighting the difference in visible area. In the depicted embodiment, the FOV is shown as circular, as the lenses in the assembly are circular. Other shapes of lens may also be used, and these will result in differing FOVs dependent on their shape.

Without being able to adjust eye relief in an HMD, the different profiles of user's heads will result in differing eye relief for each user. A typical distribution may be as follows (sums to 100.1%, due to rounding):

| **Eye Relief (ER)** | **Percentage** | |
|---|---|---|
| <10 | 1 | % |
| 10-15 | 40 | % |
| 15-20 | 45 | % |
| 20-25 | 15 | % |
| >25 | 0.1 | % |

Of course, some HMDs therefore incorporate the ability to adjust ER for each user. However, whilst this might mitigate against the most extreme ERs, a large range of ER will still remain across the population, and it may change during use.

It is an objective of the present disclosure to use eye relief measurements to improve the performance of head-mounted displays, such as by improvement of image processing and/or image generation.

### Statements of Invention

According to a first aspect of the invention, there is provided a head-mounted display system according to claim 1.

By measuring and processing the eye relief signal, the display can be modified such that is optimised for use with the measured eye relief, reducing the workload on image processing equipment being used in conjunction with the head-mounted display system.

Eye relief in this context is used generally as a term for a measured distance between a point on the HMD and a point on the user. Commonly, the point on the HMD will be a part of the lens through which the user looks, and more specifically a point on the top surface of the lens known in the art as the lens vertex. Similarly, the point on the user may be the entrance pupil of the eye of the user. Of course, the eye relief signal may not measure these positions directly but may provide a signal indicative of these positions by measuring other parts of the user and HMD and applying an offset. For example, the eye relief signal may be a measure of the distance between the eye relief sensor and the cornea of the eye of the user, as this is the part of the eye closest to the lens vertex. One or more offsets may then be applied in order to take into account the standard or mean distance between the cornea and the entrance pupil and a known distance between the eye relief sensor and the lens or display of the HMD. The entrance pupil of the eye gives the greatest benefit since it defines the actual field of view that the user sees. However, taking another measure that is close to the entrance pupil will also give a benefit and may be simpler to determine.

The output of the display is modified in a portion of the display. The remainder of the display may be left unmodified.

The portion of the display may be a peripheral portion of the display. In this way, the extremities of the display, where the user cannot view the display, may be modified, whilst providing less or no modification to the more central portions of the display. The peripheral portion may be around the entire periphery of the display or may be around a portion of the periphery of the display.

The size of the portion of the display may be dependent on the eye relief signal. The portion of the display being modified - for example the part no longer being rendered - may grow as the eye relief signal is indicative of an increased eye relief. Conversely, if the eye relief signal is indicative of a decreased eye relief, the portion of the display being modified may fall.

The output of the display may be modified by varying a total area rendered on the display. By decreasing the total area rendered on the display, the processing load of the HMD or of other systems in communication with the HMD may be decreased.

The total area rendered on the display may be decreased when the eye relief signal is indicative of an increased eye relief.

Alternatively, the total area rendered may be simplified. For example, an area of the display that is not required may be rendered as a block of colour, such as black, which requires minimal processing.

The output of the display may be modified by varying a rendering quality of the display.

"Rendering quality" may include one or more of resolution, shading, and level of detail (LOD).

The sensor system may comprise an eye tracking system for tracking a gaze direction of the user, the eye tracking system outputting an eye tracking signal to the processor.

The at least one processor may be configured to further modify the output of the display in response to the eye tracking signal. The at least one processor may utilise the eye tracking signal in order to better determine a visible portion of the display or in order to provide further modification such as foveated rendering.

The at least one processor may be further configured to process together the eye tracking signal and the eye relief signal to produce a signal indicative of an area of the display visible to the user.

The eye relief signal may be updated during continued use of the head-mounted display system and the display may be modified accordingly.

Alternatively, the eye relief signal may be generated during an initial period of use of the head-mounted display system, such as during a calibration procedure, and may be static during continued use of the head-mounted display system.

The eye relief signal may include a component indicative of a Z-distance from a gaze origin. The Z-distance is the distance from each eye of the user towards the respective lens of the head-mounted display system in a direction perpendicular to a plane extending from a centre of the lens to an edge of the lens.

The eye relief signal may include a component indicative of a Z-distance from an entrance pupil of the eye. The Z-distance is the direction from each eye of the user towards the respective lens of the HMD.

The eye relief signal may include at least one predetermined offset. The predetermined offset may take into account that the visible area of the display is dependent on a length from a specific part of the eye to the lens of the head-mounted display system. If the distance being measured by the sensor system is not between these specific parts then the use of one or more offsets can allow for this measurement to be corrected for use in further processing.

The predetermined offset may include a term that modifies the eye relief signal in view of an input strength of prescription for eye correction devices, such as eyeglasses or contact lenses. Prescription eyewear can modify the effective eye relief, i.e. they move the effective 3D placement of the entrance pupil so it is closer or further away than it otherwise would be, and therefore taking into account this fact can be used to make the present system more effective.

According to a second aspect of the invention, there is provided a method of improving performance of a head-mounted display system according to claim 8.

Modifying the output of the display comprises modifying a portion of the display. The remainder of the display may be left unmodified.

The portion of the display may be a peripheral portion of the display. In this way, the extremities of the display, where the user cannot view the display, may be modified, whilst providing less or no modification to the more central portions of the display. The peripheral portion may be around the entire periphery of the display or may be around a portion of the periphery of the display.

The size of the portion of the display may be dependent on the eye relief signal. The portion of the display being modified - for example the part no longer being rendered - may grow as the eye relief signal is indicative of an increased eye relief. Conversely, if the eye relief signal is indicative of a decreased eye relief, the portion of the display being modified may fall.

The output of the display may be modified by varying a total area rendered on the display. By decreasing the total area rendered on the display, the processing load of the HMD or of other systems in communication with the HMD may be decreased.

The total area rendered on the display may be decreased when the eye relief signal is indicative of an increased eye relief.

The output of the display may be modified by varying a rendering quality of the display.

"Rendering quality" may include one or more of resolution, shading, and level of detail (LOD).

The method may further comprise tracking a gaze direction of the user, using an eye tracking system, and outputting an eye tracking signal from the eye tracking system to the processor.

The method may further comprise modifying the output of the display in response to the eye tracking signal. The at least one processor may utilise the eye tracking signal in order to better determine a visible portion of the display or in order to provide further modification such as foveated rendering.

The method may further comprise processing together the eye tracking signal and the eye relief signal to produce a signal indicative of an area of the display visible to the user.

The method may further comprise updating the eye relief signal during continued use of the HMD and modifying the display accordingly.

The method may further comprise generating the eye relief signal during an initial period of use of the HMD, such as during a calibration procedure, and maintaining the eye relief signal during continued use of the HMD.

The eye relief signal may include a component indicative of a Z-distance from a gaze origin. The Z-distance is the distance in a direction perpendicular to a plane extending from a centre of the lens to an edge of the lens.

The eye relief signal may include a component indicative of a Z-distance from an entrance pupil of the eye. The Z-distance is the direction from each eye of the user towards the respective lens of the HMD.

The eye relief signal may include at least one predetermined offset. The predetermined offset may take into account that the visible area of the display is dependent on a length from a specific part of the eye to the lens of the HMD. If the distance being measured by the sensor system is not between these specific parts then the use of one or more offsets can allow for this measurement to be corrected for use in further processing.

According to a third aspect of the invention, there is provided a computer program according to claim 13.

The method may further comprise any additional or optional features as mentioned in relation to the second aspect.

### Brief Description of the Drawings

Specific embodiments will now be described in detail with reference to the accompanying drawings, in which:
**Figures 1a and 1b** are simplified depictions of how eye relief impacts viewing angles and FOV in an HMD;
**Figure 2** is a simplified view of a head-mounted display system according to the first aspect;
**Figure 3** is a schematic view of the electronics of the head-mounted display system of Figure 2;
**Figure 4** is a flow chart showing the steps of the method according to the second aspect;
**Figure 5** is a depiction of an operation of the display of the head-mounted display system of Figure 2;
**Figure 6** is a depiction of an alternative operation of the display of the head-mounted display system of Figure 2; and
**Figure 7** is a depiction of a further alternative operation of the display of the head-mounted display system of Figure 2.

### Detailed Description

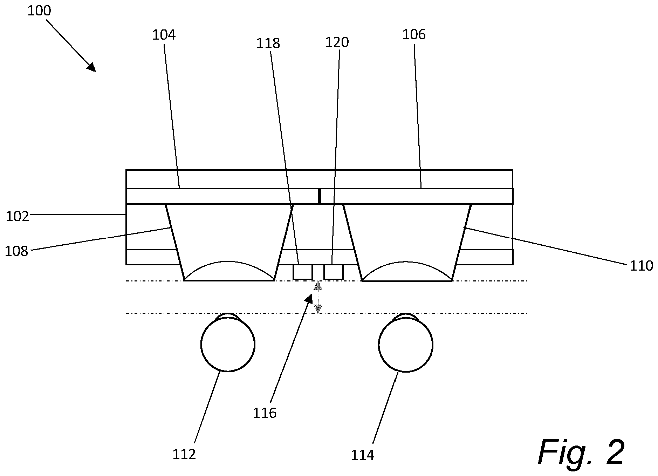

A head-mounted display system 100 (referred to as an "HMD") is depicted in Figure 2. The HMD 100 comprises a housing 102 within which are housed two displays 104, 106. Two lenses 108, 110 are provided through which a user can view the displays 104, 106. Each eye 112, 114 of the user can see one display 104, 106 through the respective lens 108, 110, i.e. the right eye 114 of the user can only see the right display 106 and the left eye 112 of the user can only see the left display 104. Of course, rather than providing two displays 104, 106, an HMD may include only a single display that is viewable by both eyes. In such a case, the display will include regions of the display that are visible to only one of the eyes, in order that a stereoscopic view is provided to the eyes. The HMD 100 will also include a strap or mount for enabling the HMD 100 to be wearable by a user. However, this is omitted from the depiction, for clarity.

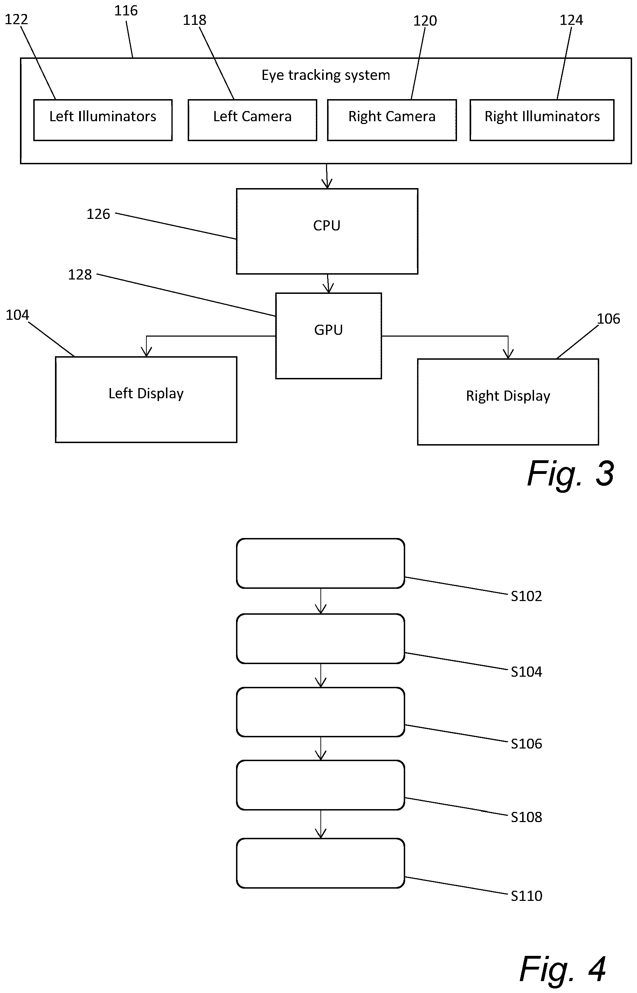

An eye tracking system 116 is also provided. In the depicted embodiment, the eye tracking system 116 comprises two eye tracking cameras 118, 120, each one directed to track the movement of one of the eyes 112, 114 of the user. The eye tracking system 116 is depicted in schematic form in Figure 3. The eye tracking system 116 of the present embodiment utilises pupil centre corneal reflection (PCCR) to track the movement of the eyes 112, 114 and therefore each camera 118, 120 has associated illuminators 122, 124 that shine at the eyes 112, 114 of the user in order to generate glints, i.e. reflections that can be used by the eye tracking system 116 to detect a gaze direction of the user. Other methods of eye tracking are also possible in place of PCCR, the options for which will be known to the skilled person in the context of the present application.

Signals output from the eye tracking system 116 are received by a processor, which in the depicted embodiment is a CPU 126. In turn, these signals can be processed by the CPU 126 in order to control an output of each of the two displays 104, 106. Rendering of the two displays 104, 106 is performed by a graphics processing unit (GPU) 128 that is in communication with the CPU 126, either via a wired or a wireless connection. The GPU 128 of the present embodiment is located in an external computer to which the HMD 100 is attached.

Whilst the described embodiment refers to a CPU internal to the HMD and a GPU external to the HMD, this is just one of a plurality of possible arrangements. The processing may be carried out in a single processor within the HMD or external to the HMD. Alternatively, more than one processor may be used, and all of the processors may be located within the HMD, all of the processors may be located external to the HMD, or some processors may be located within the HMD and other processors may be located external to the HMD. Processing may also be executed in one or more external servers, for example in a cloud computing system.

Where cloud computing is used, the present invention may have additional benefits due to the fact that the lowering of the rendered area may allow the system to operate at a higher framerate, for example, than equivalent systems that render the entire area of the display independent of eye relief.

The method of operation of the HMD 100 is described with reference to the preceding Figures and the flow chart of Figure 4.

The CPU receives S102 the eye tracking signals from the eye tracking system 116, including an eye relief signal indicative of the eye relief of the user. The eye relief is a measure of the distance between an eye of the user and the lens 108, 110 of the HMD 100. There may be a single eye relief signal indicative of an eye relief of both eyes 112, 114, for example an average, maximum, or minimum eye relief of both eyes together, or a separate eye relief signal may be received for each eye 112, 114.

The eye relief signal can be calculated by the eye tracking system 116, for example by using position of glints caused by illuminators 122, 124 in the eye tracking system 116 to determine the distance from each illuminator 122, 124 to the cornea. As the position of each illuminator 122, 124 relative to the respective camera 118, 120 is known, as is the position of the lens 108, 110, geometry can be used to determine the distance between the cornea and the lens 108, 110. The distance between the lens 108, 110 and the cornea, commonly referred to as the Z-distance, is a normal output signal of an eye tracking system 116.

If the eye relief signal is required to be between the entrance pupil of the eye and the lens 108, 110, a predetermined offset can be applied that is equal to an average distance between the cornea and the entrance pupil. This predetermined offset may be 2 to 3 mm.

The determination of eye relief may also take into account the gaze angle of the user, in order to generate a more accurate signal. As the eye rotates, the centre of the cornea will rotate relative to the centre of rotation of the eye, and therefore the distance between the cornea and the lens 108, 110 will change. The direction of gaze may therefore be used to modify the eye relief signal.

The eye tracking signal is used by the CPU 126 to determine S104 what parts of the display 104, 106 are visible to the user. The visible parts of the display 104, 106 are calculated by the CPU 126 by reference to a look-up table that correlates a known visible portion of the display 104, 106 with the eye relief indicated by the eye tracking system 116. This is possible as the portion of the display 104, 106 visible will be the same with any user when the eye relief is a certain distance. The look-up table may therefore be predetermined and stored in memory. The values stored in the look-up table are initially calculated in knowledge of the dimensions, characteristics, and relative positions and/or sizes of the components of the HMD 100, and in particular the displays 104, 106 and lenses 108, 110, e.g. the diameter of the lens 108, 110.

Alternatively, the visible parts of the display 104, 106 may be determined through calculations performed by the CPU 126 during use of the system. For example, simple geometric calculations may calculate the visibility of the display in knowledge of the eye relief of the user and the geometry of the HMD 100.

In some arrangements, the shape of the lens 108, 110 may also affect the visible display area. For example, some lenses include cut-out portions in order to fit around a nose of the user. In such a case, the or each processor may consider the shape of the lens when determining which areas of the display to render at each eye relief.

Once a visible portion of the display 104, 106 has been determined by the processor, the CPU 126 will then determine the image to be rendered and this information can be transmitted S106 to the GPU 128. The GPU 128, in turn, will only render S108 the portion of the image for display 104, 106 that will be visible to the user of the HMD 100. In this way, the total rendering workload of the GPU 128 can be lowered to only that which the user can see, which can improve latency, rendering quality, framerate, and power consumption of the HMD 100, for example. Once the GPU 128 has rendered the image, each image is fed S110 to the displays of the HMD.

Where the eye relief is determined separately for each eye, the CPU 126 and GPU 128 will determine and render, respectively, different areas of the display 104, 106 depending on the specific eye relief of each eye 112, 114.

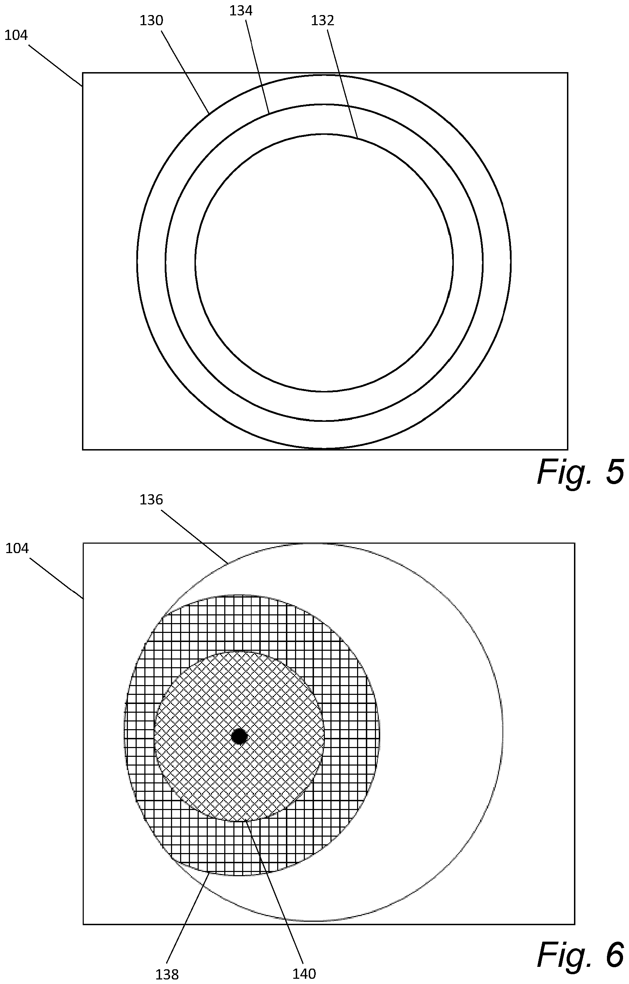

Figure 5 is a depiction of the difference that the operation of the present HMD 100 has on the total area rendered on each display 104, 106. One display 104 is shown in Figure 5, although it will be apparent that both displays 104, 106 will be affected when the described method is in operation.

A total area of the display 104 is shown as a rectangle. The concentric circles denote areas 130, 132, 134 within the rectangle representing the different portions of the display 104 that are rendered depending on the eye relief determined by the eye tracking system 116. The visible area is approximated as a circle due to the effect of the lens 108, which is circular in the present embodiment. It will be apparent to the skilled person that the actual rendered area on the display 104 may not be circular, as there may be distortion - e.g. pin cushion distortion - introduced to the image by the lens 108 and therefore the image rendered on the display 104 must include an inverse of this distortion in order for the rendered image to be displayed correctly to the user.

An outermost area 130 is that visible to the user when the eye relief is at a minimum, in this case 15 mm. The visible area 130 is therefore a maximum and incorporates a large proportion of the total area of the display 104. It will be apparent that the areas of the display 104 that are not rendered, i.e. all of the area of the display that is outside of the outermost area 130, are not visible to the user of the HMD 100 and therefore no image need be displayed on these portions. Where each pixel is illuminated without the need for a backlight, such as in an OLED display, the fact that a proportion of the pixels will not be emitting any light will result in a lower overall power consumption of the display 104.

The visible area of the display 104 in the example of Figure 5 may change with movements of the user's eye, due to changes in viewpoint caused by eye rotation, but it is mainly dependent upon the eye relief. As such, there will exist non-active portions of the display that cannot be viewed by the user and will have no effect on the user's enjoyment of the HMD 100.

The two further circles or areas 132, 134 depict the visible area of two other eye reliefs of potential users. For example, the innermost area 132 depicts the visible area at a 25 mm eye relief whilst the intermediate area 134 depicts the visible area at a 20 mm eye relief. It will be clear to the skilled person that the visible area of the display 104 is smaller the larger the eye relief of the user. As such, a greater proportion of the display 104 is not used for displaying an image.

It will be apparent that the eye relief of the user is not limited to three different values and that therefore the system may vary the area rendered in smaller increments, such as every millimetre or every two millimetres. Alternatively, the area rendered may be continuously variable based on a measurement of eye relief that is only limited by the resolution of the eye relief signal generated by the eye tracking system 116. In such a case, in order that a look-up table need not be generated for every possible variation of eye relief, the rendered area may be calculated by the processor or processors during operation of the HMD 100, using an algorithm.

Changing eye relief can have a significant impact on the viewable area of the display 104, as is shown in the table below. For comparison purposes, the values in the table are based on an assumed 50 mm distance between the lens and the display, and a 60 x 60 mm display size.

| **ER (mm)** | **FOV (degrees)** | **Area (mm^2)** | **Part of display shown** |
|---|---|---|---|
| 10 (max FOV) | 68 | 2827 | 100% |
| 15 | 59 | 1630 | 58% |
| 20 | 51 | 1058 | 37% |
| 25 | 45 | 745 | 26% |
| 30 | 40 | 563 | 20% |

As can be seen, an increase in eye relief of 20 mm can result in a reduction in viewable area of 80% for the user. The savings in processing and battery, amongst other things, can therefore be very great if the system takes into account the physical limitations of the user.

Figure 6 shows the effect of another method of operation of the system on what is viewable on the display. In this method, the CPU 126 also receives a gaze tracking signal from the eye tracking system 116. The CPU 126 can therefore instruct the GPU 128 to carry out foveated rendering on the image to be displayed, i.e. to vary the resolution of the displayed image based on the position of the gaze of the user.

In Figure 6, the user has an eye relief of 15 mm, and therefore the total area visible to the user is depicted by the large circle 136. However, as the gaze of the user is also being tracked by the eye tracking system 116, it is possible to determine that the actual visible region - i.e. the region that the user can see at any one time - is actually smaller than the total area that is potentially visible. The area to render can therefore be shrunk by the same amount.

The processor therefore determines the actual visible area 138, taking into account the gaze direction of the user, and instructs the GPU to render the area that is visible. As before, the CPU 126 may refer to a look-up table that includes not only eye relief but also gaze direction in order to determine the visible area 138 of the display 104, or the CPU 126 may use an algorithm to determine the visible area 138.

In addition to determining the visible area 138, the CPU 126 also determines an area of the display that the gaze is focussed on and therefore can utilise the fact that the human eye can only see clearly in a relatively small area of vision, which is provided by the part of the retina called the fovea. Because of this phenomenon, it is not necessary to render the entire visible area in full resolution. Instead, the parts of the image directly around the gaze point, termed the foveal region 140, can be rendered in full resolution and the parts of the visible region outside of this may be rendered at a lower resolution. This is shown in Figure 6. By limiting the resolution of the area outside of the foveal region 140, the total amount of processing required from the GPU 128 can be further reduced, without any detrimental effect on the user experience.

As the gaze of the user moves, the foveal region 140 will also move. The CPU 126 will therefore need to continually update the area requiring rendering, taking into account the current gaze direction of the user. Whilst the processing of the GPU 128 is therefore further reduced, the CPU 126 may have a greater workload when providing foveated rendering than when only tracking the eye relief of the user.

As discussed in relation to Figure 6, the movement of the eyes to the sides can have a further limiting effect to the viewable area of the display. Again assuming a 50 mm lens to display distance and a 60 x 60 mm display, the following table shows how rotation of the eyes to sides has a significant effect on the viewable area.

| **ER (mm)** | **FOV front view (degrees)** | **FOV side view (degrees)** | **Area (mm^2)** | **Part of display shown** |
|---|---|---|---|---|
| 10 (max FOV) | 62 | 47 | 1873 | 66% |
| 15 | 55 | 42 | 1139 | 40% |
| 20 | 49 | 38 | 773 | 27% |
| 25 | 44 | 35 | 569 | 20% |
| 30 | 40 | 32 | 437 | 15% |

In these cases, the side the user is looking towards has a lower field of view in the periphery, whilst the side the user is looking away from will have a larger field of view in the periphery. As the peripheral vision of a person is not as detailed as the foveal view, the foveated rendering can take this into account when determining how much of the display to render. When foveated rendering is not used, such as in the embodiment described below, it is possible to simply omit to render the parts of the display in the direction the user is not directly looking, as the peripheral vision of the user is incapable of properly distinguishing the image anyway.

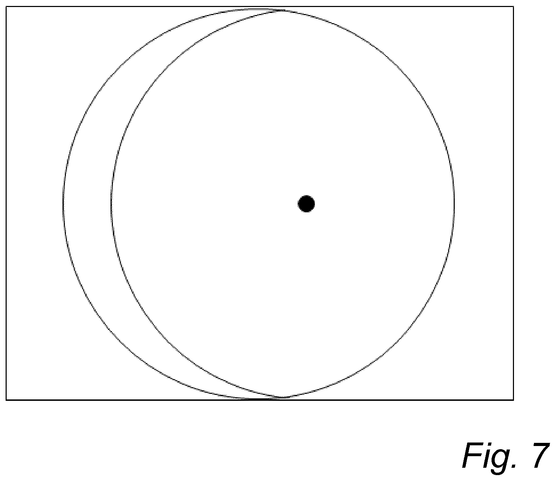

In a further embodiment, the CPU 126 utilises the eye tracking signal and the eye relief signal as in the previous embodiment, but the system does not perform foveated rendering. As can be seen in Figure 7, the total visible area is again depicted as a circle, and is dependent only on the eye relief of the user. A gaze point is also shown. As the gaze point is slightly to the right of centre, it will be apparent that the user will no longer be able to see the area of the display on the far left, i.e. whilst it is possible for that area of the screen to be seen by the user through the lens, at the current time, the portion on the far left is not visible due to the gaze direction of the user. As such, the area of the total visible area that is not visible need not be rendered by the GPU.

Movement of the gaze point towards the right, however, does not cause additional rendering on the right side of the total visible area, as this will remain non-visible due to the lens in conjunction with the eye relief of the user. In this way, the total rendered area can be lowered by taking into account the gaze direction of the user but without implementing foveated rendering. This means that the processor will need to continuously receive the gaze tracking signal and feed this to the GPU to instruct rendering of the correct area, but does not require as precise eye tracking data as when implementing foveated rendering.

In embodiments where an eye tracking signal is not required, the sensor system may utilise a sensor other than an eye tracking sensor to detect the eye relief of the user. Any other sensor suitable for detecting a distance between a part of the HMD and the eye of the user can be used. Specific, but nonlimiting, examples of such sensors include time-of-flight sensors, ultrasonic sensors, and capacitive sensors. It is also possible to use manual adjustment by the user of an eye relief setting, which manually controls how far away the lens is from the user's eye. In this case, the sensor system will be adapted to determine an adjustment of the manual eye relief setting using any suitable form of sensor. Of course, where manual adjustment is used, an assumption will have to be made about the likely *actual* eye relief of the user based on the manually set distance. A predetermined offset may be used for this purpose, which is based on the eye relief of an average user at that manual distance setting.

In some embodiments, it may be advantageous to include a degree of user feedback when determining how much of the display to render. This could ensure that there is a degree of flexibility to take into account any tolerances of the system and in particular the eye relief signal. For example, the at least one processor may be configured to perform a calibration where rendered area of the display is varied over time and the user indicates when they can - or cannot - see an edge of the rendered image. Thus, the system can learn or refine the rendered area on the display in response to user feedback.

In each of the above embodiments, the lowering of required GPU power has been provided through either completely failing to render certain areas of the display, or by reducing the quality of rendering of certain areas of the display, such as by reducing the resolution. However, these embodiments or others may utilise other methods of modifying the output of the display in order to provide similar benefits. For example, the display may be modified by providing a lower quality of content rather than by removing content from parts of the display entirely. This may be achieved by lowering the resolution of certain portions of the display or by modifying compression of the data, for example. Any methods of reducing GPU workload may be used in association with the present disclosure, and such methods will be apparent to the skilled person in the context of the present disclosure.

## Claims

1. A head-mounted display system (100), comprising:
a display (104, 106) for displaying an image to an eye (112, 114) of a user;
a lens (108, 110), interposed between the eye (112, 114) of the user and the display (104, 106), through which the user views the display;
a sensor system (118, 120) configured to detect an eye relief and to output an eye relief signal indicative of the eye relief; and
at least one processor (126) configured to receive the eye relief signal and to modify an output of a portion of the display (104, 106) in response to the eye relief signal, wherein the size of the portion of the display is dependent on the eye relief signal.

2. The head-mounted display system (100) of claim 1, wherein the output of the display is modified by at least one of:
varying a total area rendered on the display; and
varying a rendering quality of the display.

3. The head-mounted display system (100) of any preceding claim, wherein the sensor system comprises an eye tracking system for tracking a gaze direction of the user, the eye tracking system outputting an eye tracking signal to the at least one processor.

4. The head-mounted display system (100) of claim 3, wherein the at least one processor is configured to further modify the output of the display in response to the eye tracking signal.

5. The head-mounted display system (100) of claim 3 or claim 4, wherein the at least one processor is configured to process together the eye tracking signal and the eye relief signal to produce a signal indicative of an area of the display visible to the user.

6. The head-mounted display system (100) of any preceding claim, wherein the eye relief signal includes a component indicative of a Z-distance from a gaze origin or a component indicative of a Z-distance from an entrance pupil of the eye.

7. The head-mounted display system (100) of any preceding claim, wherein the at least one processor includes a graphics processing unit, GPU (128), configured to render images for display on the at least one display, optionally wherein the at least one processor includes a central processing unit, CPU, configured to provide rendering instructions to the GPU (128).

8. A method of improving performance of a head-mounted display system, the method comprising:
detecting an eye relief of a user of the head-mounted display system and outputting an eye relief signal indicative of the eye relief, using a sensor system;
receiving (S102) the eye relief signal, using at least one processor; and
using the at least one processor, modifying an output of a portion of the display in response to the eye relief signal, wherein the size of the portion of the display is dependent on the eye relief signal.

9. The method of claim 8, wherein the step of modifying the output of the display comprises at least one of:
varying a total area rendered on the display; and
varying a rendering quality of the display.

10. The method of any of claims 8 or 9, further comprising the step of tracking a gaze direction of the user, using an eye tracking system, and outputting an eye tracking signal from the eye tracking signal to the at least one processor, optionally comprising the step of modifying the output of the display in response to the eye tracking signal.

11. The method of claim 10, further comprising the step of the at least one processor processing together the eye tracking signal and the eye relief signal to produce a signal indicative of an area of the display visible to the user.

12. The method of any of claims 8 to 11, wherein the eye relief signal includes a component indicative of a Z-distance from a gaze origin or a component indicative of a Z-distance from an entrance pupil of the eye.

13. A computer program having instructions that, when executed by at least one processor (126), cause the at least one processor to perform a method of improving performance of a head-mounted display system (100), the method comprising:
detecting an eye relief of a user of the HMD and outputting an eye relief signal indicative of the eye relief, using a sensor system (118, 120);
receiving the eye relief signal; and
modifying an output of a portion of a display (104,106) of the head-mounted display system in response to the eye relief signal, wherein the size of the portion of the display is dependent on the eye relief signal.

## Patentansprüche

1. Kopfmontiertes Anzeigesystem (100), umfassend:
eine Anzeige (104, 106) zum Anzeigen eines Bilds für ein Auge (112, 114) eines Benutzers;
eine Linse (108, 110), die zwischen dem Auge (112, 114) des Benutzers und der Anzeige (104, 106) eingeschoben ist, durch die der Benutzer die Anzeige betrachtet;
ein Sensorsystem (118, 120), das konfiguriert ist, um einen Augenabstand zu erkennen und um ein Augenabstandssignal auszugeben, das den Augenabstand angibt; und
mindestens einen Prozessor (126), der konfiguriert ist, um das Augenabstandssignal zu empfangen und um eine Ausgabe eines Teils der Anzeige (104, 106) als Reaktion auf das Augenabstandssignal zu ändern, wobei die Größe des Teils der Anzeige von dem Augenabstandssignal abhängig ist.

2. Kopfmontiertes Anzeigesystem (100) nach Anspruch 1, wobei die Ausgabe der Anzeige über mindestens eines geändert wird von:
Variieren eines Gesamtbereichs, der auf der Anzeige gerendert wird; und
Variieren einer Rendering-Qualität der Anzeige.

3. Kopfmontiertes Anzeigesystem (100) nach einem der vorstehenden Ansprüche, wobei das Sensorsystem ein Augenverfolgungssystem zum Verfolgen einer Blickrichtung des Benutzers umfasst, wobei das Augenverfolgungssystem ein Augenverfolgungssignal an den mindestens einen Prozessor ausgibt.

4. Kopfmontiertes Anzeigesystem (100) nach Anspruch 3, wobei der mindestens eine Prozessor konfiguriert ist, um die Ausgabe der Anzeige als Reaktion auf das Augenverfolgungssignal weiter zu ändern.

5. Kopfmontiertes Anzeigesystem (100) nach Anspruch 3 oder 4, wobei der mindestens eine Prozessor konfiguriert ist, um das Augenverfolgungssignal und das Augenabstandssignal gemeinsam zu verarbeiten, um ein Signal zu erzeugen, das einen für den Benutzer sichtbaren Bereich der Anzeige angibt.

6. Kopfmontiertes Anzeigesystem (100) nach einem der vorstehenden Ansprüche, wobei das Augenabstandssignal eine Komponente, die einen Z-Abstand von einem Blickursprung angibt, oder eine Komponente einschließt, die einen Z-Abstand von einer Eintrittspupille des Auges angibt.

7. Kopfmontiertes Anzeigesystem (100) nach einem der vorstehenden Ansprüche, wobei der mindestens eine Prozessor eine Grafikverarbeitungseinheit, GPU (128), einschließt, die konfiguriert ist, um Bilder für die Anzeige auf der mindestens einen Anzeige zu rendern, wobei der mindestens eine Prozessor optional eine zentrale Verarbeitungseinheit, CPU, einschließt, die konfiguriert ist, um der GPU (128) Rendering-Anweisungen bereitzustellen.

8. Verfahren zum Verbessern einer Leistung eines kopfmontierten Anzeigesystems, das Verfahren umfassend:
Erkennen eines Augenabstands eines Benutzers des kopfmontierten Anzeigesystems und Ausgeben eines Augenabstandssignals, das den Augenabstand angibt, unter Verwendung eines Sensorsystems;
Empfangen (S102) des Augenabstandssignals unter Verwendung mindestens eines Prozessors; und
unter Verwendung des mindestens einen Prozessors, Ändern einer Ausgabe eines Teils der Anzeige als Reaktion auf das Augenabstandssignal, wobei die Größe des Teils der Anzeige von dem Augenabstandssignal abhängig ist.

9. Verfahren nach Anspruch 8, wobei der Schritt des Änderns der Ausgabe der Anzeige mindestens eines umfasst von:
Variieren eines Gesamtbereichs, der auf der Anzeige gerendert wird; und
Variieren einer Rendering-Qualität der Anzeige.

10. Verfahren nach einem der Ansprüche 8 oder 9, ferner umfassend den Schritt des Verfolgens einer Blickrichtung des Benutzers, unter Verwendung eines Augenverfolgungssystems, und des Ausgebens eines Augenverfolgungssignals von dem Augenverfolgungssignal an den mindestens einen Prozessor, optional umfassend den Schritt des Änderns der Ausgabe der Anzeige als Reaktion auf das Augenverfolgungssignal.

11. Verfahren nach Anspruch 10, ferner umfassend den Schritt, dass der mindestens eine Prozessor das Augenverfolgungssignal und das Augenabstandssignal gemeinsam verarbeitet, um ein Signal zu erzeugen, das einen für den Benutzer sichtbaren Bereich der Anzeige angibt.

12. Verfahren nach einem der Ansprüche 8 bis 11, wobei das Augenabstandssignal eine Komponente, die einen Z-Abstand von einem Blickursprung angibt, oder eine Komponente einschließt, die einen Z-Abstand von einer Eintrittspupille des Auges angibt.

13. Computerprogramm, das Anweisungen aufweist, die, wenn sie über mindestens einen Prozessor (126) ausgeführt werden, den mindestens einen Prozessor veranlassen, ein Verfahren zum Verbessern der Leistung eines kopfmontierten Anzeigesystems (100) durchzuführen, das Verfahren umfassend:
Erkennen eines Augenabstands eines Benutzers der HMD und Ausgeben eines Augenabstandssignals, das den Augenabstand angibt, unter Verwendung eines Sensorsystems (118, 120);
Empfangen des Augenabstandssignals; und
Ändern einer Ausgabe eines Teils einer Anzeige (104, 106) des kopfmontierten Anzeigesystems als Reaktion auf das Augenabstandssignal, wobei die Größe des Teils der Anzeige von dem Augenabstandssignal abhängig ist.

## Revendications

1. Système de visiocasque (100), comprenant :
un écran (104, 106) pour afficher une image devant un œil (112, 114) d'un utilisateur ;
une lentille (108, 110), interposée entre l'œil (112, 114) de l'utilisateur et l'écran (104, 106), à travers laquelle l'utilisateur voit l'écran ;
un système de capteurs (118, 120) configuré pour détecter un dégagement de point d'œil et produire un signal de dégagement de point d'œil indiquant le dégagement de point d'œil ; et
au moins un processeur (126) configuré pour recevoir le signal de dégagement de point d'œil et pour modifier une sortie d'une partie de l'écran (104, 106) en réponse au signal de dégagement de point d'œil, dans lequel la taille de la partie de l'écran dépend du signal de dégagement de point d'œil.

2. Système de visiocasque (100) selon la revendication 1, dans lequel la sortie de l'écran est modifiée par au moins l'une parmi :
une variation d'une surface totale rendue sur l'écran ; et
une variation d'une qualité de rendu de l'écran.

3. Système de visiocasque (100) selon l'une quelconque revendication précédente, dans lequel le système de capteurs comprend un système de suivi oculaire pour suivre une direction du regard de l'utilisateur, le système de suivi oculaire produisant un signal de suivi oculaire à l'au moins un processeur.

4. Système de visiocasque (100) selon la revendication 3, dans lequel l'au moins un processeur est configuré pour modifier davantage la sortie de l'écran en réponse au signal de suivi oculaire.

5. Système de visiocasque (100) selon la revendication 3 ou la revendication 4, dans lequel l'au moins un processeur est configuré pour traiter ensemble le signal de suivi oculaire et le signal de dégagement de point d'œil pour produire un signal indiquant une zone de l'écran visible par l'utilisateur.

6. Système de visiocasque (100) selon l'une quelconque revendication précédente, dans lequel le signal de dégagement de point d'œil comporte une composante indiquant une distance Z par rapport à une origine du regard ou une composante indiquant une distance Z par rapport à une pupille d'entrée de l'œil.

7. Système de visiocasque (100) selon l'une quelconque revendication précédente, dans lequel l'au moins un processeur comporte une unité de traitement graphique, GPU (128), configurée pour rendre des images à afficher sur l'au moins un écran, dans lequel éventuellement l'au moins un processeur comporte une unité centrale de traitement, CPU, configurée pour fournir des instructions de rendu à la GPU (128).

8. Procédé d'amélioration des performances d'un système de visiocasque, le procédé comprenant :
la détection d'un dégagement de point d'œil d'un utilisateur du système de visiocasque et la production d'un signal de dégagement de point d'œil indiquant le dégagement de point d'œil, à l'aide d'un système de capteurs ;
la réception (S102) du signal de dégagement de point d'œil, à l'aide d'au moins un processeur ; et
à l'aide de l'au moins un processeur, la modification d'une sortie d'une partie de l'écran en réponse au signal de dégagement de point d'œil, dans lequel la taille de la partie de l'écran dépend du signal de dégagement de point d'œil.

9. Procédé selon la revendication 8, dans lequel l'étape consistant à modifier la sortie de l'écran comprend au moins l'une parmi :
une variation d'une surface totale rendue sur l'écran ; et
une variation d'une qualité de rendu de l'écran.

10. Procédé selon l'une quelconque des revendications 8 ou 9, comprenant en outre l'étape consistant à suivre une direction du regard de l'utilisateur, à l'aide d'un système de suivi oculaire, et à produire un signal de suivi oculaire à partir du signal de suivi oculaire à l'au moins un processeur, comprenant éventuellement l'étape consistant à modifier la sortie de l'écran en réponse au signal de suivi oculaire.

11. Procédé selon la revendication 10, comprenant en outre l'étape consistant pour l'au moins un processeur à traiter ensemble le signal de suivi oculaire et le signal de dégagement de point d'œil pour produire un signal indiquant une zone de l'écran visible par l'utilisateur.

12. Procédé selon l'une quelconque des revendications 8 à 11, dans lequel le signal de dégagement de point d'œil comporte une composante indiquant une distance Z par rapport à une origine du regard ou une composante indiquant une distance Z par rapport à la pupille d'entrée de l'œil.

13. Programme informatique comportant des instructions qui, lorsqu'elles sont exécutées par au moins un processeur (126), amènent l'au moins un processeur à réaliser un procédé d'amélioration des performances d'un système de visiocasque (100), le procédé comprenant :
la détection d'un dégagement de point d'œil d'un utilisateur du HMD et la production d'un signal de dégagement de point d'œil indiquant le dégagement de point d'œil, à l'aide d'un système de capteurs (118, 120) ;
la réception du signal de dégagement de point d'œil ; et
la modification d'une sortie d'une partie de l'écran (104,106) du système de visiocasque en réponse au signal de dégagement de point d'œil, dans lequel la taille de la partie de l'écran dépend du signal de dégagement oculaire.
